(19) **Europäisches Patentamt / European Patent Office / Office européen des brevets**

(11) **EP 3 039 497 B1**

(12) **FASCICULE DE BREVET EUROPEEN**

(45) Date de publication et mention de la délivrance du brevet:
**29.08.2018 Bulletin 2018/35**

(21) Numéro de dépôt: **14790212.6**

(22) Date de dépôt: **01.10.2014**

(51) Int Cl.:
*G05B 23/02* ^(2006.01)     *G07C 5/08* ^(2006.01)
*G07C 5/00* ^(2006.01)     *B64F 5/60* ^(2017.01)
*B64D 31/06* ^(2006.01)

(86) Numéro de dépôt international:
**PCT/FR2014/052485**

(87) Numéro de publication internationale:
**WO 2015/052408 (16.04.2015 Gazette 2015/15)**

(54) **SURVEILLANCE D'UN MOTEUR D'AÉRONEF POUR ANTICIPER LES OPÉRATIONS DE MAINTENANCE**

ÜBERWACHUNG EINES FLUGZEUGMOTORS ZUR VORAUSPLANUNG VON WARTUNGSOPERATIONEN

MONITORING OF AN AIRCRAFT ENGINE TO ANTICIPATE MAINTENANCE OPERATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.10.2013   FR 1359903**

(43) Date de publication de la demande:
**06.07.2016   Bulletin 2016/27**

(73) Titulaire: **Safran Aircraft Engines**
**75015 Paris (FR)**

(72) Inventeurs:
- **LACAILLE, Jérôme Henri Noël**
  **77550 Moissy-Cramayel Cedex (FR)**
- **GOUBY, Aurélie**
  **77550 Moissy-Cramayel Cedex (FR)**

(74) Mandataire: **Brevalex**
**95, rue d'Amsterdam**
**75378 Paris Cedex 8 (FR)**

(56) Documents cités:
**EP-A1- 2 376 988**

**Description**

**DOMAINE DE L'INVENTION**

La présente invention se rapporte au domaine de surveillance d'un moteur d'aéronef. En particulier, l'invention concerne un procédé et un système de surveillance d'un moteur d'aéronef pour pronostiquer les opérations de maintenance en estimant une marge résiduelle de température de sortie des gaz d'échappement du moteur.

Durant chaque vol, un aéronef procède à l'enregistrement et l'envoi d'informations sur son fonctionnement selon un système de message nommé ACARS (Aircraft Communication Addressing and Reporting System). Ces données sont récupérées par les stations au sol en temps réel pour être traitées immédiatement dans le cas d'anomalies évidentes et sinon pour être archivées avec toutes les données de la flotte.

Les données relatives au moteur sont ensuite consultées par des experts pour surveiller le bon fonctionnement du moteur. Entre autres, les experts analysent les données concernant la température des gaz d'échappement EGT (Exhaust Gas Temperature) issus des vols successifs pour diagnostiquer l'état d'un moteur et pronostiquer les défaillances. En particulier, les experts estiment la marge résiduelle de température de sortie EGT qui représente la différence entre un seuil de température limite et la température EGT mesurée. Ainsi, il est important de surveiller l'évolution de cette marge de manière à pouvoir anticiper le franchissement d'un seuil au-delà duquel le moteur doit être déposé pour restauration de ses performances.

Il est connu dans les documents WO81/03079, FR2939928, US2013/204808 et WO2008/127539 des méthodes de surveillance d'un moteur d'aéronef.

On notera qu'en début de vie, la marge est élevée et diminue progressivement avec le nombre de cycles. Ainsi, le signal temporel de la marge résiduelle de température évolue normalement selon une courbe décroissante représentative de l'usure naturelle du moteur.

Toutefois, au lieu de décroitre continuellement, le signal temporel de la marge qu'on observe habituellement présente des oscillations aléatoires. Ces oscillations sont principalement dues aux interventions effectuées sur le moteur et à moindre mesure aux conditions d'acquisition des mesures de température. Des augmentations artificielles de la marge résiduelle de température peuvent être provoquées par des nettoyages plus ou moins fréquents des moteurs réalisés pour éliminer les saletés accumulées de vol en vol.

Ces oscillations du signal temporel de la marge résiduelle de température compliquent l'analyse et ne permettent pas de prévoir convenablement à l'avance et avec précision la date de défaillance du moteur.

L'objet de la présente invention est par conséquent, de remédier aux inconvénients précités en proposant un procédé et un système de surveillance de la marge résiduelle de température de sortie des gaz d'échappement d'un moteur d'aéronef permettant de pronostiquer de manière simple, précise et suffisamment à l'avance la défaillance du moteur.

**OBJET ET RÉSUME DE L'INVENTION**

La présente invention concerne un procédé de surveillance d'un moteur d'aéronef, comportant les étapes suivantes :

- acquisition d'un signal temporel de marge résiduelle de température de sortie des gaz d'échappement dudit moteur d'aéronef,
- lissage dudit signal temporel pour former une première courbe représentative de ladite marge résiduelle de température,
- identification des morceaux descendants dans ladite première courbe,
- construction d'une deuxième courbe par concaténation desdits morceaux descendants, ladite deuxième courbe étant continue tout en étant restreinte auxdits morceaux descendants de ladite première courbe, et
- construction d'un modèle de prédiction à partir de ladite deuxième courbe pour déterminer au moins un indicateur de pronostic de défaillance.

Ce procédé modélise de manière simple et rapide l'usure réelle du moteur en éliminant les augmentations artificielles de la marge de température et permettant ainsi de pronostiquer avec précision la défaillance du moteur.

Avantageusement, l'identification des morceaux descendants dans ladite première courbe comporte les étapes suivantes :

- application sur la première courbe d'un modèle statistique d'accroissement décomposable en deux parties indépendantes composées d'une première fonction décroissante représentative d'une usure habituelle du moteur d'aéronef et d'une deuxième fonction échelon composée de sauts déclenchés de manière aléatoire et représentatifs d'interventions ponctuelles sur le moteur d'aéronef,
- recherche de remontées correspondantes auxdits sauts, et
- identification des morceaux descendants en supprimant les points desdites remontées sur la première courbe.

Ceci permet d'éliminer les augmentations artificielles de la marge de température pour ne conserver que les intervalles correspondants aux morceaux décroissants représentatifs de l'usure du moteur.

Avantageusement, la construction par concaténation de ladite deuxième courbe comporte un collage desdits morceaux descendants en déplaçant chaque morceau précédent pour la faire joindre au morceau suivant en commençant par le dernier morceau et en remontant dans le temps de proche en proche.

Ceci permet de modéliser la tendance décroissante indiquant l'usure réelle du moteur.

Selon un premier mode de réalisation de l'invention, la construction dudit modèle de prédiction comporte les étapes suivantes :

- construction d'un modèle autorégressif modélisant l'évolution de la marge résiduelle de température en utilisant l'historique de ladite deuxième courbe, et
- application d'un filtre dynamique sur ledit modèle autorégressif pour déterminer ledit au moins un indicateur de pronostic de défaillance.

Cette construction d'un modèle dynamique permet de faire des pronostics précis sur tout type de moteur et à n'importe quelle période de la vie du moteur.

Avantageusement, le filtre dynamique est sélectionné parmi l'ensemble des filtres particulaires suivants : filtre bayesien, filtre de Kalman, filtres de Kalman étendus.

Selon un deuxième mode de réalisation de l'invention, la construction dudit modèle de prédiction comporte les étapes suivantes :

- construction d'un modèle linéaire de l'évolution de la marge de température en utilisant l'historique de ladite deuxième courbe, et
- application d'une technique de régression sur ledit modèle linéaire pour déterminer ledit au moins un indicateur de pronostic de défaillance.

La construction d'un modèle linéaire est très simple et permet de faire des pronostics précis avec très peu de calcul.

Avantageusement, ledit au moins un indicateur de pronostic de défaillance est sélectionné parmi un ensemble d'indicateurs comprenant :

- un premier indicateur d'estimation de la probabilité de franchissement d'un seuil de défaillance avant un horizon temporel prédéterminé, et
- un deuxième indicateur d'estimation de la date de franchissement d'un seuil de défaillance.

Avantageusement, l'acquisition dudit signal temporel de marge résiduelle de température comporte les étapes suivantes :

- acquisition au cours du temps des mesures de la température de sortie des gaz d'échappement du moteur d'aéronef,
- normalisation desdites mesures de température par rapport à une température de référence iso standard formant ainsi des mesures de température normalisées,
- standardisation desdites mesures de température normalisées en prenant en compte des données de contexte formant ainsi des mesures de température standardisées, et
- calcul des marges entre lesdites mesures de température standardisées et une valeur de température maximale prédéterminée (en fonction du moteur) pour former ledit signal temporel de marge.

Ainsi, le signal temporel de marge est recueilli selon des conditions physiques standards et indépendamment du contexte.

L'invention vise également un système de surveillance d'un moteur d'aéronef, comportant :

- des moyens d'acquisition et de traitement configurés pour recueillir un signal temporel de marge résiduelle de température de sortie des gaz d'échappement dudit moteur d'aéronef,
- des moyens d'acquisition et de traitement configurés pour lisser ledit signal temporel formant ainsi une première courbe représentative de ladite marge résiduelle de température,
- des moyens d'acquisition et de traitement configurés pour identifier des morceaux descendants dans ladite première courbe,
- des moyens d'acquisition et de traitement configurés pour construire une deuxième courbe par concaténation desdits morceaux descendants, ladite deuxième courbe étant continue tout en étant restreinte auxdits morceaux descendants de ladite première courbe,
- des moyens d'acquisition et de traitement configurés pour construire un modèle de prédiction à partir de ladite deuxième courbe pour déterminer au moins un indicateur de pronostic de défaillance.

L'invention vise aussi un programme d'ordinateur susceptible d'être mis en oeuvre par des moyens de traitement et comportant des instructions de code adaptées à la mise en oeuvre du procédé de surveillance selon l'une quelconque des caractéristiques ci-dessus.

## BRÈVE DESCRIPTION DES DESSINS

D'autres particularités et avantages du système et du procédé selon l'invention ressortiront mieux à la lecture de la description faite ci-après, à titre indicatif mais non limitatif, en référence aux dessins annexés sur lesquels :

- la Fig. 1 illustre de manière schématique des moyens matériels mis en oeuvre dans le système ou procédé qui peuvent être employés pour la surveillance d'un moteur d'aéronef selon l'invention ;
- la Fig. 2A illustre les mesures EGT d'un moteur d'aéronef pendant un ensemble de vols successifs ;
- la Fig. 2B illustre les mesures EGT standardisées du moteur d'aéronef pendant un ensemble de vols successifs ;

- la Fig. 3 illustre le signal temporel de marge résiduelle de température de sortie des gaz d'échappement ;
- la Fig. 4 illustre une première courbe correspondant au lissage du signal temporel de la Fig. 3 sur une période prédéterminée, selon l'invention ;
- la Fig. 5 illustre une représentation graphique des remontées correspondant aux sauts de la première courbe, selon l'invention ;
- la Fig. 6 illustre une représentation graphique d'une deuxième courbe formée par la concaténation des morceaux descendants, selon l'invention ;
- la Fig. 7 illustre l'application d'un filtre particulaire sur le système dynamique de la deuxième courbe, selon l'invention ;
- la Fig. 8 illustre l'application d'un filtre particulaire sur le système dynamique de la deuxième courbe relative à un moteur jeune, selon l'invention ; et
- la Fig. 9 illustre de manière schématique deux indicateurs de pronostic de défaillance, selon l'invention.

## DESCRIPTION DÉTAILLÉE DE MODES DE RÉALISATION

Le principe de l'invention consiste à supprimer des points correspondant à une augmentation artificielle de la marge résiduelle de température pour ne conserver que les parties décroissantes représentatives de l'usure réelle du moteur. Ainsi, en observant l'évolution de cette usure, il est possible de pronostiquer avec une grande précision la future défaillance du moteur et les opérations de maintenance à mener.

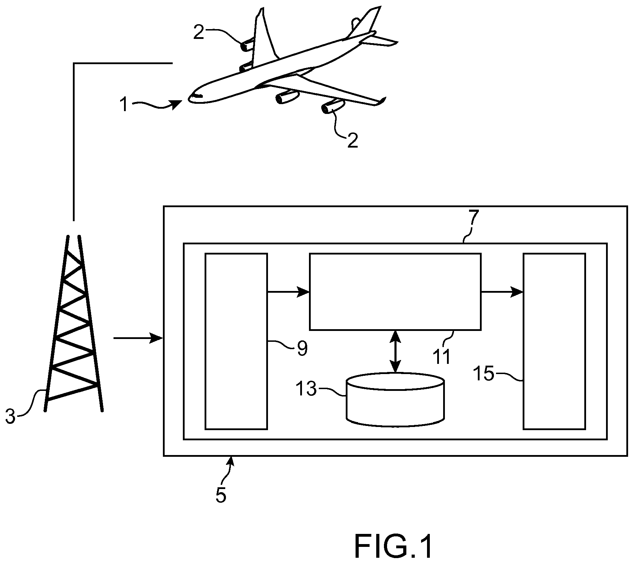

La Fig. 1 illustre un exemple de moyens matériels mis en oeuvre dans le système ou procédé de surveillance d'un moteur d'aéronef selon l'invention. La présente invention peut également s'appliquer à un aéronef comportant plusieurs moteurs, tel que représenté sur la Fig. 1.

Au cours d'un vol, un aéronef 1 procède à l'enregistrement d'informations sur son fonctionnement ainsi que sur différents paramètres environnementaux. Ces données enregistrées par des calculateurs embarqués par l'aéronef (par exemple, FADEC, ACMS, etc.) sont issues des mesures fournies par des moyens de mesure ou capteurs intégrés dans l'aéronef 1. Par exemple, le FADEC (qui contrôle le moteur 2 de l'aéronef 1) enregistre un certain nombre de données mesurées par des capteurs intégrés au moteur 2 permettant à la fois de contrôler le moteur 2 et de servir de base à une procédure prédictive de maintenance.

Les calculateurs de l'aéronef 1 recueillent ainsi au cours du temps des données relatives au moteur 2 de l'aéronef et son environnement. A chaque acquisition, ces données comprennent des informations relatives à des paramètres endogènes décrivant le comportement du moteur 2 ainsi qu'à des paramètres exogènes décrivant le contexte d'acquisition.

A titre d'exemple, les paramètres endogènes comprennent la température de sortie des gaz d'échappement EGT (Exhaust Gas Temperature), les vitesses de rotation des arbres, le débit du carburant, les températures et pressions de fluides en différentes localisations du moteur (par exemple, avant et/ou après compression), etc.

Les paramètres exogènes peuvent comprendre la température extérieure, l'altitude, le poids de l'avion, la géométrie variable de vanne de décharge, les consignes des turbines haute pression et basse pression, vitesse de l'avion, etc.

Par ailleurs, un aéronef 1 envoie régulièrement au sol de courts messages instantanés concernant les paramètres endogènes et exogènes. Durant chaque vol, l'aéronef 1 envoie en général au moins deux messages au sol, l'un lors du décollage et l'autre pendant la phase de croisière. Ces messages sont notamment envoyés par satellite (protocole ACARS) grâce à un système de transmission de données numériques entre l'aéronef en vol et le sol (d'autres protocoles de communication sont possibles : PCMCIA, 3G, etc.).

Les stations au sol 3 récupèrent les différents messages émis à différentes dates pour différents aéronefs 1 et pour différents moteurs 2 et les envoient ensuite par l'intermédiaire d'un moyen de communication à un centre de gestion 5. Ce dernier comporte un système informatique 7 comprenant de manière habituelle des moyens d'entrée 9, des moyens d'acquisition et de traitement 11, des moyens de stockage 13, et des moyens de sortie 15. On notera que d'autres données enregistrées durant le vol sur les calculateurs embarqués peuvent aussi être déchargées régulièrement pour enrichir le recueil des informations relatives aux moteurs 2.

Les différentes données issues des messages reçus directement des différents aéronefs 1 ou celles récupérées au sol depuis les mémoires internes des calculateurs embarqués, sont stockées dans les moyens de stockage 13 pour constituer une base de données 14 sur toute une flotte de moteurs 2.

La présente invention s'intéresse surtout aux données relatives à la température de sortie des gaz d'échappement EGT des moteurs.

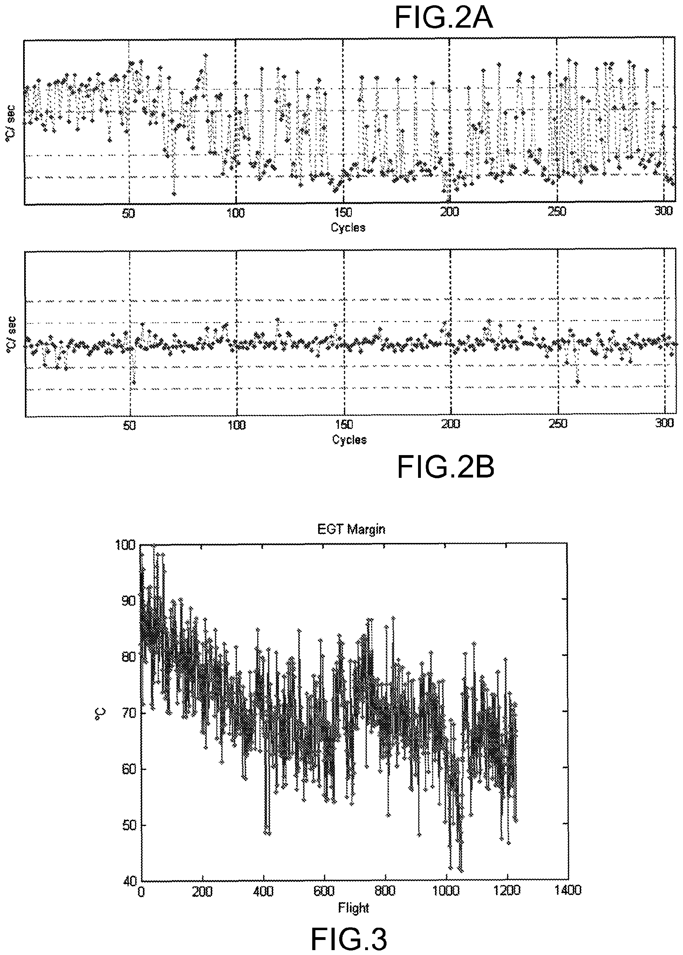

La Fig. 2A illustre les mesures EGT d'un moteur d'aéronef pendant un ensemble de vols successifs. L'axe des ordonnées représente les valeurs EGT et l'axe des abscisses le nombre de cycles ou vols.

Certains capteurs intégrés dans le moteur d'aéronef sont configurés pour acquérir au cours du temps des mesures de la température de sortie des gaz d'échappement du moteur. Le contexte d'acquisition de ces données peut être très variable. Par exemple, les mesures concernant le décollage acquises lors d'un premier vol de la journée où le moteur est démarré à froid peuvent être différentes de celles acquises lors des autres vols de la journée. D'autres exemples concernent la variation des conditions météo (pluie, neige, gel, etc.), le changement de pilote, le lieu de survol (au-dessus de la mer, du désert, de la terre, etc.). Ainsi, les mesures EGT sont très dépendantes des conditions extérieures.

Avantageusement, les moyens de traitement 11 sont configurés pour réaliser une double normalisation sur ces mesures EGT par rapport à un référentiel standard ainsi que par rapport au contexte afin de supprimer l'influence des conditions extérieures.

Plus particulièrement, les mesures de température (EGT) sont normalisées par rapport à une température de référence iso standard formant ainsi des mesures de température normalisées. La température de référence est définie par rapport à une température de décollage mesurée au niveau de la mer. Ces mesures de température normalisées sont en outre standardisées par rapport aux données de contexte pour former des mesures EGT standardisées. La technique de standardisation est par exemple décrite dans le brevet de la demanderesse EP2376988 et repose en particulier sur un modèle de régression en prenant éventuellement en considération des paramètres supplémentaires construits à partir de calculs utilisant des paramètres exogènes initiaux.

La Fig. 2B illustre les mesures EGT standardisées du moteur d'aéronef pendant un ensemble de vols successifs. La représentation graphique de la Fig. 2B correspond à la standardisation de celle de la Fig. 2A. Les deux représentations ont la même échelle et sont centrées sur la valeur moyenne des mesures EGT. Les traits discontinus horizontaux représentent les bornes $\pm 3\sigma$ et $\pm 6\sigma$ autour de la valeur moyenne.

Enfin, les moyens de traitement 11 sont configurés pour calculer des marges entre les mesures EGT standardisées et une valeur de température maximale prédéterminée pour construire le signal temporel de marge résiduelle de température de sortie des gaz d'échappement comme illustré sur la Fig. 3. La température maximale correspond en général à une température limite requérant la dépose du moteur en atelier.

En particulier, la Fig. 3 montre que le signal temporel de marge résiduelle de température présente des oscillations aléatoires malgré le fait qu'il est basé sur des mesures EGT standardisées. Ces oscillations sont essentiellement dues aux différentes interventions (par exemple, nettoyages à l'eau) effectuées sur le moteur.

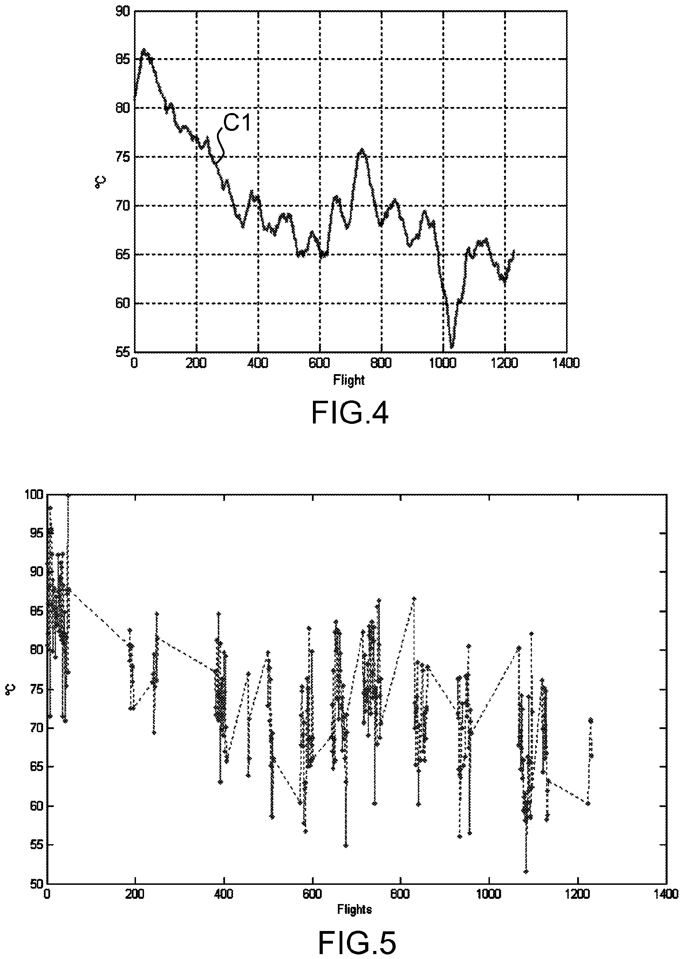

Les moyens de traitement 11 sont en outre configurés pour lisser le signal temporel de la Fig. 3 afin de former une première courbe C1 représentative de la marge résiduelle de température comme illustré sur la Fig. 4. Le lissage du signal temporel peut être réalisé selon une technique connue de filtrage (moyenne mobile, filtre gaussien, etc.). La première courbe C1 montre clairement des sauts montants correspondant à des augmentations artificielles de la marge résiduelle de température. Ces sauts montants semblent se présenter de manière plus ou moins régulière mais avec des effets différents.

Conformément à l'invention, il est proposé de supprimer les sauts montants pour ne conserver que les parties descendantes représentatives de l'usure réelle du moteur.

Ainsi, les moyens de traitement 11 sont configurés pour identifier automatiquement les morceaux descendants dans la première courbe. Plus particulièrement, l'identification des morceaux descendants peut par exemple être réalisée en recherchant les remontées correspondant aux sauts.

Selon un mode de réalisation préféré de l'invention, les moyens de traitement 11 appliquent un modèle statistique correspondant à un processus statistique d'accroissement sur la première courbe C1 pour extraire les zones dépourvues de sauts montants.

Ce processus statistique est décomposable en deux parties indépendantes de sorte qu'un accroissement $dX_t = X_{t+1} - X_t$ de la marge résiduelle de température relatif à la première courbe C1, est défini par la somme d'une première fonction décroissante $U_t$ et d'une deuxième fonction échelon $H_t$ selon l'équation suivante:

$$dX_t = U_t + H_t$$

La fonction décroissante $U_t$ est représentative d'une usure habituelle du moteur d'aéronef et peut être considérée comme une variable aléatoire $U_t$ qui suit une distribution gaussienne $U_t \sim N(-u, \sigma_u)$ paramétrée par une espérance négative $-u$ représentant la décroissance naturelle de la marge résiduelle de température et par un écart-type $\sigma_u$.

La fonction échelon $H_t$ est représentative des interventions sur le moteur d'aéronef et peut être définie par un produit $H_t = Z_t G_t$ d'une loi booléenne aléatoire $Z_t$ et d'une variable aléatoire de saut positif $G_t$.

La variable aléatoire de saut $G_t$ peut aussi être décrite suivant une distribution gaussienne $G_t \sim N(+g, \sigma_g)$ paramétrée par un saut moyen $g$ positif et par un écart-type $\sigma_g$, le saut moyen $g$ étant supérieur à la valeur absolue $u$ de la décroissance naturelle $-u$ de la marge résiduelle de température.

La loi booléenne $Z_t$ déclenche le saut $G_t$ de manière aléatoire avec une petite probabilité $p$ et peut par exemple être définie par une loi binomiale $Z_t \sim B(p)$ de paramètre $p$ prédéterminé. Ainsi, la probabilité d'une intervention sur le moteur (i.e., une remontée) est donnée par $p = P(Z_t = 1)$. Alors, pour identifier les morceaux descendants modélisés par la variable aléatoire $U_t$, il suffit de prendre l'ensemble des instants t où $Z_t = 0$ en supprimant les points correspondants aux remontées.

La Fig. 5 illustre une représentation graphique des remontées correspondant aux sauts. Cette représentation montre des points localisés autour des instants isolés correspondant à des actions ponctuelles, séparés par des longs intervalles. Les instants isolés présentent des épaisseurs artificielles qui sont induites par les opérations de normalisation et de lissage. On notera que ces instants isolés sont beaucoup moins nombreux que les instants de décroissance et peuvent donc être ignorés sans incidence sur la valeur des paramètres $-u$ et $\sigma_u$ de

la distribution gaussienne $U_t \sim N(-u, \sigma_u)$.

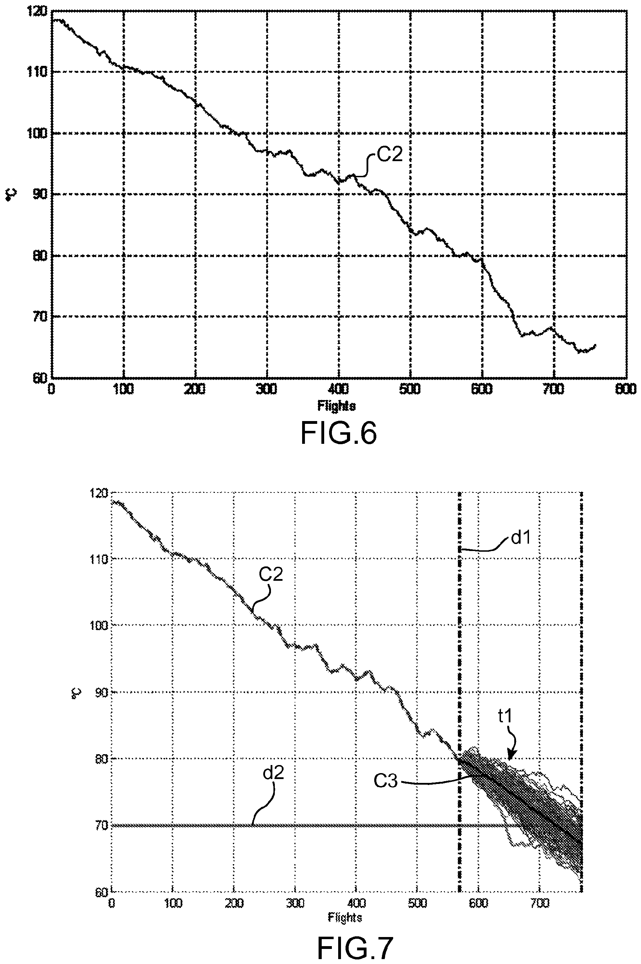

Une fois que les instants isolés de remontées sont supprimés, les moyens de traitement 11 sont configurés pour construire une deuxième courbe C2 par concaténation des morceaux descendants, comme illustré sur la Fig. 6. La deuxième courbe est alors continue et décroissante tout en étant restreinte aux seuls morceaux descendants de la première courbe C1.

La construction par concaténation de la deuxième courbe C2 consiste à déplacer verticalement et horizontalement les morceaux descendants pour coller les bouts entre eux de manière à assurer une continuité entre les différents morceaux.

En particulier, les moyens de traitements 11 sont configurés pour commencer par le dernier morceau (i.e., le morceau le plus récent) pour que les dernières valeurs aient un sens physique. Ensuite, les autres morceaux sont concaténés en remontant dans le temps de proche en proche. Ainsi, chaque morceau précédent (i.e., antérieur) est déplacé pour le faire joindre au morceau suivant de manière successive dans le sens inverse du temps. Autrement dit, on ajoute progressivement les valeurs des variations $dX_t = X_{t-1} - X_t$ de droite à gauche pour former la deuxième courbe C2.

En outre, les moyens de traitement 11 sont configurés pour construire à partir de la deuxième courbe C2 un modèle de prédiction de défaillance permettant de déterminer au moins un indicateur de pronostic de défaillance du moteur.

On notera que la courbe illustrée dans l'exemple de la Fig. 6 est pratiquement linéaire. Ainsi, selon un premier mode de réalisation, il est avantageux d'utiliser l'historique de la deuxième courbe C2 pour construire un modèle linéaire de l'évolution de la marge résiduelle de température et d'appliquer ensuite sur ce modèle linéaire une technique de régression assez simple pour déterminer le ou les indicateur(s) de pronostic de défaillance. Selon ce mode de réalisation, il n'est pas nécessaire d'analyser la dynamique du signal et il suffit d'estimer la tendance générale de la décroissance qui suit une loi de type Student.

Toutefois, pour des moteurs assez jeunes, la décroissance de la marge est lente et n'est pas strictement linéaire. Alors, selon un deuxième mode de réalisation, on utilise une méthode stochastique basée sur des filtres dynamiques ou particulaires.

De manière générale, un bon moyen pour anticiper un processus continu consiste à modéliser son comportement avec un modèle autorégressif. Ainsi, on construit un modèle autorégressif modélisant l'évolution de la marge résiduelle de température en utilisant l'historique de la deuxième courbe. Alors, il est possible d'extraire un processus d'états $(X_t)_{t>0}$ dits cachés à partir des observations $(Y_t)_{t>1}$.

En particulier, on suppose que le processus d'états $(X_t)_{t>0}$ est une chaîne de Markov d'ordre 1 et que le lien entre $(X_t)_{t>0}$ et $(Y_t)_{t>1}$ est régi par une hypothèse de canal sans mémoire. Alors, l'espace d'états du modèle autorégressif peut être défini de la manière suivante :

$$\begin{cases} X_t = FX_{t-1} + e_t \\ Y_t = HX_{t-1} \end{cases}$$

$e_t$ est un bruit blanc, l'opérateur $F$ est la matrice de transition d'états et l'opérateur $H$ est la matrice d'observation définissant le système dynamique. On notera que grâce à la suppression des sauts montants, le système dynamique qui capte la décroissance du signal de la marge résiduelle de température est très simple à analyser et à mettre en oeuvre et consomme très peu d'étapes de calcul tout en fournissant des résultats très précis.

Ensuite, on applique un filtre dynamique sur le modèle autorégressif pour estimer de façon récursive le processus d'états cachés $(X_t)_{t>0}$ à partir des observations $(Y_t)_{t>1}$ selon une technique bayésienne. Le filtrage dynamique permet ainsi de déterminer pour tout instant $k$ l'état caché $X_k$ à partir des observations disponibles $Y_1,...,Y_k$ (i.e., jusqu'à l'instant $k$). On peut ainsi déterminer ensuite le ou les indicateur(s) de pronostic de défaillance à long terme et avec précision.

En effet, la Fig. 7 illustre l'application d'un filtre particulaire sur le système dynamique de la deuxième courbe.

La courbe C2 jusqu'à la ligne verticale en traits discontinus d1 correspond au processus d'observations $(Y_t)$ représentant l'évolution observée de la marge. La ligne verticale d1 correspond ainsi à l'instant où l'on fait une prédiction en fonction du processus d'observations $(Y_t)$. A partir de cet instant, l'application du filtre dynamique simule une pluralité de trajectoires particulaires t1, la courbe en gras C3 à l'intérieur des différentes trajectoires t1 représentant la trajectoire moyenne. La ligne horizontale d2 représente le seuil de défaillance. Il est à noter que la qualité de la prédiction est très bonne grâce à la connaissance précise du système dynamique et notamment grâce à la suppression des remontées correspondant aux interventions ponctuelles sur le moteur.

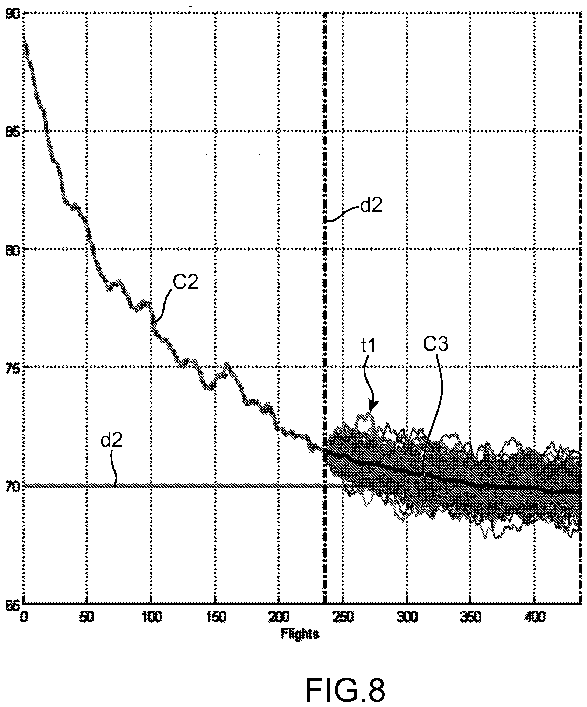

La Fig. 8 illustre l'application d'un filtre particulaire sur le système dynamique relatif à un moteur jeune.

Au départ, la diminution de la marge résiduelle de température est assez forte à cause d'un phénomène de rodage du jeune moteur. Ensuite, l'évolution s'adoucit et la décroissance devient assez lente. De la même manière que dans la Fig. 7, l'application du filtre dynamique simule une pluralité de trajectoires particulaires avec une grande qualité de prédiction.

Ainsi, l'utilisation d'un modèle dynamique à filtre particulaire permet de faire des pronostics précis à long terme pour tous types de moteurs et à tout âge.

Il est à noter que le filtre dynamique peut être un filtre bayesien linéaire ou non-linéaire. En variante, on peut utiliser un filtre de Kalman, ou une extension d'un filtre de Kalman (par exemple, un filtre de Kalman étendu).

L'application quelconque de l'un de ces filtres dynamiques sur le modèle de prédiction permet d'estimer l'évolution de la marge résiduelle de température et par conséquent de déterminer des indicateurs de pronostic de défaillance qui peuvent être utilisés comme des indicateurs d'alerte.

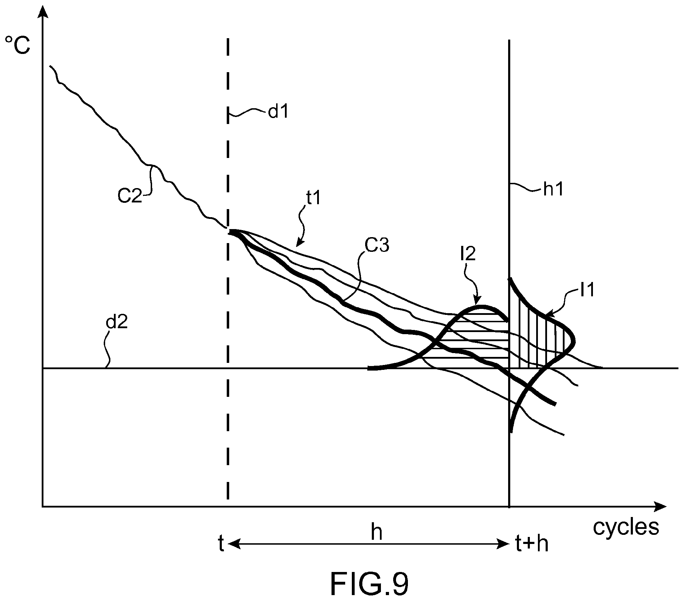

La Fig. 9 illustre de manière schématique deux indicateurs de pronostic de défaillance, selon l'invention.

Le premier indicateur I1 estime la probabilité de franchissement du seuil de défaillance d2 avant un horizon temporel h1 prédéterminé. Ceci est schématisé par le calcul d'une probabilité de détection POD (Probability Of Détection) à l'instant t+h. A titre d'exemple, l'horizon temporel h1 peut correspondre à une date programmée pour l'inspection du moteur.

En variante, on peut raisonner en termes d'estimation de la durée de vie restante RUL (Remaining Useful Life) du moteur. Dans ce cas, le deuxième indicateur estime la date de franchissement du seuil de défaillance d2.

Ainsi, ces indicateurs de pronostic de défaillance I1, I2 permettent de prévoir la probabilité de défaillance une fois arrivé à un horizon futur h1, ou de prédire la date de défaillance.

L'invention vise aussi un programme d'ordinateur, susceptible d'être mis en oeuvre dans les moyens de traitement et comportant des instructions de code adaptées à la mise en oeuvre d'un procédé selon l'invention telle que décrite ci-dessus.

**Revendications**

1. Procédé de surveillance d'un moteur d'aéronef, **caractérisé en ce qu'**il comporte les étapes suivantes :

   - acquisition d'un signal temporel de marge résiduelle de température de sortie des gaz d'échappement dudit moteur (2) d'aéronef,
   - lissage dudit signal temporel pour former une première courbe (C1) représentative de ladite marge résiduelle de température,
   - identification des morceaux descendants dans ladite première courbe,
   - construction d'une deuxième courbe (C2) par concaténation desdits morceaux descendants, ladite deuxième courbe étant continue tout en étant restreinte auxdits morceaux descendants de ladite première courbe, et
   - construction d'un modèle de prédiction à partir de ladite deuxième courbe pour déterminer au moins un indicateur de pronostic de défaillance (I1, I2).

2. Procédé selon la revendication 1, **caractérisé en ce que** l'identification des morceaux descendants dans ladite première courbe comporte les étapes suivantes :

   - application sur la première courbe (C1) d'un modèle statistique d'accroissement décomposable en deux parties indépendantes composées d'une première fonction décroissante représentative d'une usure habituelle du moteur d'aéronef et d'une deuxième fonction échelon composée de sauts déclenchés de manière aléatoire et représentatifs d'interventions ponctuelles sur le moteur d'aéronef,
   - recherche de remontées correspondantes auxdits sauts, et
   - identification des morceaux descendants en supprimant les points desdites remontées sur la première courbe.

3. Procédé selon la revendication 1 ou 2, **caractérisé en ce que** la construction par concaténation de ladite deuxième courbe (C2) comporte un collage desdits morceaux descendants en déplaçant chaque morceau précédent, pour la faire joindre au morceau suivant en commençant par le dernier morceau et en remontant dans le temps de proche en proche.

4. Procédé selon l'une quelconque des revendications précédentes, **caractérisé en ce que** la construction dudit modèle de prédiction comporte les étapes suivantes :

   - construction d'un modèle autorégressif modélisant l'évolution de la marge résiduelle de température en utilisant l'historique de ladite deuxième courbe, et
   - application d'un filtre dynamique sur ledit modèle autorégressif pour déterminer ledit au moins un indicateur de pronostic de défaillance.

5. Procédé selon la revendication 4, **caractérisé en ce que** le filtre dynamique est sélectionné parmi l'ensemble des filtres particuliers suivants : filtre bayesien, filtre de Kalman, filtres de Kalman étendus.

6. Procédé selon l'une quelconque des revendications 1 à 3, **caractérisé en ce que** la construction dudit modèle de prédiction comporte les étapes suivantes :

   - construction d'un modèle linéaire de l'évolution de la marge résiduelle de température en utilisant l'historique de ladite deuxième courbe, et
   - application d'une technique de régression sur ledit modèle linéaire pour déterminer ledit au moins un indicateur de pronostic de défaillance.

7. Procédé selon l'une quelconque des revendications précédentes, **caractérisé en ce que** ledit au moins un indicateur de pronostic de défaillance est sélectionné parmi un ensemble d'indicateurs comprenant :

- un premier indicateur (I1) d'estimation de la probabilité de franchissement d'un seuil de défaillance avant un horizon temporel prédéterminé, et
- un deuxième indicateur (I2) d'estimation de la date de franchissement d'un seuil de défaillance.

8. Procédé selon l'une quelconque des revendications précédentes, **caractérisé en ce que** l'acquisition dudit signal temporel de marge résiduelle de température comporte les étapes suivantes :

- acquisition au cours du temps des mesures de la température de sortie des gaz d'échappement du moteur d'aéronef,
- normalisation desdites mesures de température par rapport à une température de référence formant ainsi des mesures de température normalisées,
- standardisation desdites mesures de température normalisées en prenant en compte des données de contexte formant ainsi des mesures de température standardisées, et
- calcul des marges entre lesdites mesures de température standardisées et une valeur de température maximale prédéterminée (en fonction du moteur) pour former ledit signal temporel de marge.

9. Système de surveillance d'un moteur d'aéronef, **caractérisé en ce qu'**il comporte :

- des moyens d'acquisition et de traitement (11) configurés pour recueillir un signal temporel de marge résiduelle de température de sortie des gaz d'échappement dudit moteur (2) d'aéronef,
- des moyens d'acquisition et de traitement (11) configurés pour lisser ledit signal temporel formant ainsi une première courbe (C1) représentative de ladite marge résiduelle de température,
- des moyens d'acquisition et de traitement (11) configurés pour identifier des morceaux descendants dans ladite première courbe,
- des moyens d'acquisition et de traitement (11) configurés pour construire une deuxième courbe (C2) par concaténation desdits morceaux descendants, ladite deuxième courbe étant continue tout en étant restreinte auxdits morceaux descendants de ladite première courbe,
- des moyens d'acquisition et de traitement (11) configurés pour construire un modèle de prédiction à partir de ladite deuxième courbe pour déterminer au moins un indicateur de pronostic de défaillance (I1, I2).

10. Programme d'ordinateur susceptible d'être mis en oeuvre par les moyens de traitement et comportant des instructions de code adaptées à la mise en oeuvre du procédé de surveillance selon l'une quelconque des revendications 1 à 8.

**Patentansprüche**

1. Verfahren zum Überwachen eines Flugzeugtriebwerks, **dadurch gekennzeichnet, dass** es die folgenden Schritte umfasst:

- Erfassen eines Zeitsignals einer Restspanne der Austrittstemperatur der Abgase des Flugzeugtriebwerks (2),
- Glätten des Zeitsignals, um eine erste Kurve (C1) zu bilden, die für die Temperaturrestspanne repräsentativ ist,
- Feststellen der abfallenden Teilstücke in der ersten Kurve,
- Erstellen einer zweiten Kurve (C2) durch Verketten der abfallenden Teilstücke, wobei die zweite Kurve kontinuierlich und dabei auf die abfallenden Teilstücke der ersten Kurve begrenzt ist, und
- Erstellen eines Vorhersagemodells anhand der zweiten Kurve, um wenigstens einen Ausfallprognoseindikator (I1, I2) zu bestimmen.

2. Verfahren nach Anspruch 1, **dadurch gekennzeichnet, dass** das Feststellen der abfallenden Teilstücke in der ersten Kurve die folgenden Schritte umfasst:

- Anwenden, auf die erste Kurve (C1), eines statistischen Wachstumsmodells, das in zwei unabhängige Teile zerlegbar ist, welche aus einer ersten abnehmenden Funktion, die für einen üblichen Verschleiß des Flugzeugtriebwerks repräsentativ ist, und aus einer zweiten Sprungfunktion, die aus Sprüngen zusammengesetzt ist, welche zufällig ausgelöst werden und für punktuelle Eingriffe an dem Flugzeugtriebwerk repräsentativ sind, bestehen,
- Suche von Anstiegen, die den Sprüngen entsprechen, und
- Feststellen der abfallenden Teilstücke durch Entfernen der Stellen der Anstiege auf der ersten Kurve.

3. Verfahren nach Anspruch 1 oder 2, **dadurch gekennzeichnet, dass** das Erstellen der zweiten Kurve (C2) durch Verkettung ein Verkleben der abfallenden Teilstücke umfasst, indem - beginnend mit dem letzten Teilstück und Schritt für Schritt zeitlich zurückgehend - ein jedes vorhergehendes Teilstück bewegt wird, um es mit dem folgenden Teilstück zu verbinden.

4. Verfahren nach einem der vorhergehenden Ansprüche, **dadurch gekennzeichnet, dass** das Erstellen des Vorhersagemodells die folgenden Schritte umfasst

- Erstellen eines autoregressiven Modells, das die Entwicklung der Temperaturrestspanne unter Verwendung der Historie der zweiten Kurve modelliert, und
- Anwenden eines dynamischen Filters auf das autoregressive Modell, um den wenigstens einen Ausfallprognoseindikator zu bestimmen.

5. Verfahren nach Anspruch 4, **dadurch gekennzeichnet, dass** das dynamische Filter aus allen folgenden Partikelfiltern ausgewählt ist: Bayes-Filter, Kalman-Filter, erweiterte Kalman-Filter.

6. Verfahren nach einem der Ansprüche 1 bis 3, **dadurch gekennzeichnet, dass** das Erstellen des Vorhersagemodells die folgenden Schritte umfasst:

- Erstellen eines linearen Modells der Entwicklung der Temperaturrestspanne unter Verwendung der Historie der zweiten Kurve, und
- Anwenden einer Regressionstechnik auf das lineare Modell, um den wenigstens einen Ausfallprognoseindikator zu bestimmen.

7. Verfahren nach einem der vorhergehenden Ansprüche, **dadurch gekennzeichnet, dass** der wenigstens eine Ausfallprognoseindikator aus einer Menge von Indikatoren ausgewählt ist, die umfasst:

- einen ersten Indikator (I1) zum Schätzen der Wahrscheinlichkeit eines Überschreitens einer Ausfallschwelle vor einem vorbestimmten Zeithorizont, und
- einen zweiten Indikator (I2) zum Schätzen des Datums des Überschreitens einer Ausfallschwelle.

8. Verfahren nach einem der vorhergehenden Ansprüche, **dadurch gekennzeichnet, dass** die Erfassung des Zeitsignals einer Temperaturrestspanne die folgenden Schritte umfasst:

- Erfassen der Messungen der Austrittstemperatur der Abgase des Flugzeugtriebwerks über die Zeit,
- Normalisierung der Temperaturmessungen in Bezug auf eine Referenztemperatur, wodurch normalisierte Temperaturmessungen gebildet werden,

- Standardisierung der normalisierten Temperaturmessungen unter Berücksichtigung von Kontextdaten, wodurch standardisierte Temperaturmessungen gebildet werden, und
- Berechnung der Spannen zwischen den standardisierten Temperaturmessungen und einem vorbestimmten maximalen Temperaturwert (in Abhängigkeit von dem Triebwerk), um das Spannenzeitsignal zu bilden.

9. System zur Überwachung eines Flugzeugtriebwerks, **dadurch gekennzeichnet, dass** es umfasst:

- Erfassungs- und Verarbeitungsmittel (11), die dazu ausgelegt sind, ein Zeitsignal einer Restspanne der Austrittstemperatur der Abgase des Flugzeugtriebwerks (2) zu erfassen,
- Erfassungs- und Verarbeitungsmittel (11), die dazu ausgelegt sind, das Zeitsignal zu glätten, wodurch eine erste Kurve (C1) gebildet wird, die für die Temperaturrestspanne repräsentativ ist,
- Erfassungs- und Verarbeitungsmittel (11), die dazu ausgelegt sind, abfallende Teilstücke in der ersten Kurve festzustellen,
- Erfassungs- und Verarbeitungsmittel (11), die dazu ausgelegt sind, eine zweite Kurve (C2) durch Verketten der abfallenden Teilstücke zu erstellen, wobei die zweite Kurve kontinuierlich und dabei auf die abfallenden Teilstücke der ersten Kurve begrenzt ist,
- Erfassungs- und Verarbeitungsmittel (11), die dazu ausgelegt sind, ein Vorhersagemodell anhand der zweiten Kurve zu erstellen, um wenigstens einen Ausfallprognoseindikator (I1, I2) zu bestimmen.

10. Computerprogramm, das geeignet ist, durch die Verarbeitungsmittel ausgeführt zu werden, und das Codeanweisungen umfasst, die für die Durchführung des Überwachungsverfahrens nach einem der Ansprüche 1 bis 8 ausgelegt sind.

**Claims**

1. A method for monitoring an aircraft engine, **characterized in that** it includes the following steps of:

- acquiring a time signal of the exhaust gas temperature residual margin of said aircraft engine (2),
- smoothing said time signal to form a first curve (C1) representing said temperature residual margin,
- identifying decreasing pieces in said first curve,
- constructing a second curve (C2) by concatenation of said decreasing pieces, said second curve being continuous while being restricted to said decreasing pieces of said first curve, and
- constructing a prediction model from said second curve to determine at least one failure forecast indicator (I1, 12).

**2.** The method according to claim 1, **characterized in that** identifying the decreasing pieces in said first curve includes the following steps of :

- applying to the first curve (C1) a statistical increase model decomposable into two independent parts formed of a first decreasing function representing a usual wear of the aircraft engine and of a second step function formed of randomly triggered hops representing ad hoc servicing operations on the aircraft engine,
- looking for ascents corresponding to said hops, and
- identifying the decreasing pieces by deleting the points from said ascents on the first curve.

**3.** The method according to claim 1 or 2, **characterized in that** constructing by concatenation said second curve (C2) includes a bonding of said decreasing pieces by displacing each previous piece, to make it join the following piece starting by the last piece and going back in time step by step.

**4.** The method according to any of the preceding claims, **characterized in that** constructing said prediction model includes the following steps of:

- constructing an autoregressive model modelling the evolution of the temperature residual margin using the record of said second curve, and
- applying a dynamic filter to said autoregressive model to determine said at least one failure forecast indicator.

**5.** The method according to claim 4, **characterized in that** the dynamic filter is selected among the set of the following particulate filters: a Bayesian filter, a Kalman filter, extended Kalman filters.

**6.** The method according to any of claims 1 to 3, **characterized in that** constructing said prediction model includes the following steps:

- constructing a linear model for the evolution of the temperature residual margin using the record of said second curve, and
- applying a regression technique to said linear model to determine said at least one failure forecast indicator.

**7.** The method according to any of the preceding claims, **characterized in that** said at least one failure forecast indicator is selected among a set of indicators comprising:

- a first indicator for estimating the probability of exceeding a failure threshold before a predetermined time horizon, and
- a second indicator (12) for estimating the date of exceeding a failure threshold.

**8.** The method according to any of the preceding claims, **characterized in that** acquiring said time signal of the temperature residual margin includes the following steps of :

- acquiring over time measurements of the exhaust gas temperature of the aircraft engine,
- normalizing said temperature measurements relative to a reference temperature thus forming normalized temperature measurements,
- standardizing said normalized temperature measurements by taking into account context data thus forming standardized temperature measurements, and
- computing the margins between said standardized temperature measurements and a predetermined maximum temperature value (as a function of the engine) to form said margin time signal.

**9.** A system for monitoring an aircraft engine, **characterized in that** it includes:

- acquisition and processing means (11) configured to collect a time signal of the exhaust gas temperature residual margin of said aircraft engine (2),
- acquisition and processing means (11) configured to smooth said time signal thus forming a first curve (C1) representing said temperature residual margin,
- acquisition and processing means (11) configured to identify decreasing pieces in said first curve,
- acquisition and processing means (11) configured to construct a second curve (C2) by concatenation of said decreasing pieces, said second curve being continuous while being restricted to said decreasing pieces of said first curve,
- acquisition and processing means (11) configured to construct a prediction model from said second curve to determine at least one failure forecast indicator (I1, 12).

**10.** A computer program likely to be implemented by the processing means and including code instructions adapted to implement the monitoring method according to any of claims 1 to 8.

FIG.1

# FIG.2A

# FIG.2B

EGT Margin

# FIG.3

FIG.4

FIG.5

FIG.6

FIG.7

FIG.8

FIG.9

## RÉFÉRENCES CITÉES DANS LA DESCRIPTION

**Documents brevets cités dans la description**

- WO 8103079 A
- FR 2939928
- US 2013204808 A
- WO 2008127539 A
- EP 2376988 A